(19) Europäisches Patentamt
European Patent Office
Office européen des brevets

(11) **EP 3 733 029 B1**

(12) **EUROPÄISCHE PATENTSCHRIFT**

(45) Veröffentlichungstag und Bekanntmachung des Hinweises auf die Patenterteilung:
**28.02.2024 Patentblatt 2024/09**

(21) Anmeldenummer: **20171591.9**

(22) Anmeldetag: **27.04.2020**

(51) Internationale Patentklassifikation (IPC):
**A47J 31/42** *(2006.01)* **A47J 42/44** *(2006.01)*

(52) Gemeinsame Patentklassifikation (CPC):
**A47J 31/42; A47J 42/44**

(54) **VERFAHREN ZUM BETREIBEN EINER KAFFEEMASCHINE**

METHOD FOR OPERATING A COFFEE MACHINE

PROCÉDÉ DE FONCTIONNEMENT D'UNE MACHINE À CAFÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.05.2019 DE 102019206396**

(43) Veröffentlichungstag der Anmeldung:
**04.11.2020 Patentblatt 2020/45**

(73) Patentinhaber: **BSH Hausgeräte GmbH**
**81739 München (DE)**

(72) Erfinder:
• **Speckbacher, Benedikt**
**83339 Chieming (DE)**
• **Nerbl, Christian**
**83512 Wasserburg am Inn (DE)**
• **Schreiner, Thomas**
**84431 Rattenkirchen (DE)**

(56) Entgegenhaltungen:
**EP-A1- 2 030 539 EP-A1- 2 153 758**
**EP-A2- 0 245 197 JP-A- 2018 033 788**

**Beschreibung**

Die vorliegende Erfindung betrifft ein Verfahren zum Betreiben einer Kaffeemaschine, die ein Mahlwerk aufweist. Die Erfindung betrifft des Weiteren eine solche Kaffeemaschine.

Zur Zubereitung eines Kaffeegetränks wird üblicherweise Wasser, gewöhnlich mit erhöhter Temperatur und unter Druck, durch ein Mahlgut aus Kaffee, insbesondere durch Kaffeepulver, geführt. Gattungsgemäße Kaffeemaschinen weisen ein Mahlwerk auf, das Kaffee mahlt und somit das Mahlgut bereitstellt. Die Qualität und Beschaffenheit des zubereiteten Kaffeegetränks hängen hierbei neben den Eigenschaften des Wassers, insbesondere dem Wasserdruck und der Wassertemperatur, von der Mahlmenge ab, durch welche das Wasser zur Zubereitung des Kaffeegetränks geführt wird.

Aus diesem Grund ist in Kaffeemaschinen zur Zubereitung eines vorgegebenen Kaffeegetränks eine vorgegebene Mahlmenge von Kaffee vorgesehen, wie z. B. aus der EP 2 152 758 A1 und der EP 2 030 539 A1 bekannt. Abweichungen von der vorgegebenen Mahlmenge führen dabei zu Abweichungen in der Qualität des zubereiteten Kaffeegetränks, wie z. B. aus der EP 0 245 197 A2 und der JP 2018 033788 A bekannt.

Die vorliegende Erfindung beschäftigt sich daher mit der Aufgabe, für ein Verfahren zum Betreiben einer Kaffeemaschine der eingangs genannten Art sowie für eine derartige Kaffeemaschine verbesserte oder zumindest andere Ausführungsformen anzugeben, welche sich durch eine verbesserte Qualität und/oder verbessert reproduzierbare Qualität des zubereiteten Kaffeegetränks auszeichnen.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Kaffeemaschine mit einem elektrisch betriebenen Mahlwerk während des Betriebs des Mahlwerks auftretende Änderungen der am Mahlwerk anliegenden elektrischen Spannung bei der Dauer des Betriebs des Mahlwerks zum Bereitstellen der Menge des aus Kaffee gemahlenen Mahlguts zu berücksichtigen. Genutzt wird hierbei die Kenntnis, dass die am Mahlwerk anliegende elektrische Spannung einen Einfluss auf die bereitgestellte Menge des Mahlguts, nachfolgend auch Mahlgutmenge genannt, hat. Folglich können Änderungen der am Mahlwerk anliegenden elektrischen Spannung zu Abweichungen von der vorgegebenen Mahlgutmenge führen. Mit der Anpassung der Betriebsdauer des Mahlwerks, nachfolgend auch Mahl-Betriebsdauer genannt, erfolgt somit ein Ausgleichen der durch die Spannungsabweichungen auftretenden Abweichungen von der vorgegebenen Mahlgutmenge, nachfolgend auch Sollmahlgutmenge, genannt. In der Folge wird die Qualität des mit dem Mahlgut bereitgestellten Kaffeegetränks, insbesondere in reproduzierbarer Weise und/oder bei schwankenden elektrischen Versorgungen der Kaffeemaschine, sichergestellt oder zumindest verbessert.

Dem Erfindungsgedanken entsprechend wird zum Betreiben der Kaffeemaschine zunächst in einem Vorabbetrieb eine Abhängigkeit zwischen der am Mahlwerk anliegenden elektrischen Spannung und der Mahlgutmenge bestimmt und als eine Spannungsabhängigkeit hinterlegt. Im Regelbetrieb der Kaffeemaschine, das heißt im Betrieb zum Zubereiten von Kaffeegetränken, wird vor der Zubereitung des Kaffeegetränks die Mahl-Betriebsdauer des Mahlwerks zur Bereitstellung der Mahlgutmenge abhängig von der Spannungsabhängigkeit bestimmt und das Mahlwerk für die somit bestimmte Mahl-Betriebsdauer betrieben, um die Mahlgutmenge des Mahlguts bereitzustellen. Die Bestimmung der Mahl-Betriebsdauer erfolgt hierbei zweckmäßig derart, dass die für das aktuell zuzubereitende Kaffeegetränk vorgegebene Mahlgutmenge bzw. die Sollmahlgutmenge bereitgestellt wird.

Die Abhängigkeit der Mahlgutmenge von der am Mahlwerk anliegenden elektrischen Spannung kann prinzipiell beliebig bestimmt werden. Vorstellbar ist es, bei unterschiedlichen am Mahlwerk anliegenden Spannungen das Mahlwerk solange zu betreiben, bis eine vorgegebene Mahlgutmenge vorliegt.

Alternativ oder zusätzlich kann bei unterschiedlichen am Mahlwerk anliegenden Spannungen das Mahlwerk für eine vorgegebene Dauer betrieben und die jeweils zugehörige Mahlgutmenge bestimmt werden.

Der Vorabbetrieb zur Bestimmung der Abhängigkeit zwischen Mahlgutmenge und anliegender Spannung ist in der Regel abhängig vom jeweiligen Mahlwerk. Der Vorabbetrieb erfolgt insbesondere vor Inbetriebnahme der Kaffeemaschine, vorzugsweise vor der Erstinbetriebnahme der Kaffeemaschine. Ebenso ist es vorstellbar, die Abhängigkeit vor der Montage des Mahlwerks in die Kaffeemaschine zu bestimmen. Denkbar ist es auch, die Bestimmung der Abhängigkeit und das Hinterlegen der Spannungsabhängigkeit in regelmäßigen und/oder vorgegebenen Abständen und/oder in Serviceintervallen der Kaffeemaschine durchzuführen.

Bevorzugt erfolgt die beschriebene Bestimmung der Mahl-Betriebsdauer bevor das jeweilige Kaffeegetränk zubereitet und ausgegeben wird. Somit wird eine vorbestimmte Qualität des jeweiligen Kaffeegetränks erreicht oder zumindest Abweichungen von der vorgegebenen Qualität reduziert.

Die Bestimmung der Abhängigkeit zwischen der Mahlgutmenge und der am Mahlwerk anliegenden elektrischen Spannung erfolgt zweckmäßig mit Kaffee, insbesondere Kaffeebohnen, die als Referenz dienen. Dabei wird mit dem Mahlwerk aus dem als Referenz dienenden Kaffee, nachfolgend auch Referenzkaffee genannt, Mahlgut bereitgestellt. Bevorzugt ist es, wenn der Referenzkaffee demjenigen Kaffee entspricht, der auch im Regelbetrieb der Kaffeemaschine zum Einsatz kommt. Somit können Abweichungen der am Mahlwerk im Betrieb anliegenden elektrischen Spannung durch die angepasste Mahl-Betriebsdauer besser ausgeglichen werden.

Das Mahlwerk ist zweckmäßig derart ausgestaltet, das es auf Kaffeebohnen Kaffeepulver als Mahlgut bereitstellt.

Mit der erfindungsgemäßen Lösung ist es insbesondere möglich, bei Kaffeemaschinen, welche an eine instabile Netzversorgung angeschlossen sind, die Qualität der bereitgestellten Kaffeegetränke weiterhin sicherzustellen oder zumindest Abweichungen der Qualität zu reduzieren.

Ebenso ist es möglich, durch interne Prozesse in der Kaffeemaschine auftretende Abweichungen der am Mahlwerk anliegenden elektrischen Spannung zu berücksichtigen.

Erfindungsgemäß wird zur Bestimmung der Mahl-Betriebsdauer eine Differenz zwischen einer am Mahlwerk anliegenden elektrischen Nominal-Spannung und einer am Mahlwerk anliegenden elektrischen Last-Spannung bestimmt und, insbesondere zusätzlich, zur Bestimmung der Mahl-Betriebsdauer berücksichtigt. Die Last-Spannung ist hierbei diejenige Spannung, die am Mahlwerk anliegt, wenn zumindest ein zum Mahlwerk zusätzlicher elektrischer Verbraucher der Kaffeemaschine elektrische Leistung bezieht, wohingegen die Nominal-Spannung diejenige Spannung ist, die ohne diesen Leistungsbezug am Mahlwerk anliegt. Somit werden auch Abweichungen der am Mahlwerk anliegenden Spannung berücksichtigt, die durch elektrische Verbraucher der Kaffeemaschine verursacht werden können.

Bevorzugt ist es dementsprechend, wenn bei der Bestimmung der Last-Spannung diejenigen elektrischen Verbraucher Leistung beziehen, welche im anschließenden Betrieb des Mahlwerks zur Bereitstellung der Mahlgutmenge betrieben werden und somit Leistung beziehen.

Die Bestimmung der Differenz erfolgt dabei vorzugsweise im Regelbetrieb der Kaffeemaschine, besonders bevorzugt vor der jeweiligen Bereitstellung der Mahlgutmenge durch das Mahlwerk. Vorstellbar ist es auch, die Differenz einmalig zu bestimmen und anschließend heranzuziehen, solange während des anschließenden Betriebs des Mahlwerks keine anderen elektrischen Verbraucher als die bereits bei der Bestimmung der Differenz berücksichtigten Verbraucher zum Einsatz kommen. Alternativ oder zusätzlich können geplante unterschiedliche Leistungsbezüge der elektrischen Verbraucher eine Neubestimmung der Spannungsdifferenz zur Folge haben.

Die Nominal-Spannung ist vorzugsweise diejenige Spannung, die am Mahlwerk anliegt, ohne dass das Mahlwerk betrieben wird. Besonders bevorzugt ist es ferner, wenn auch die Last-Spannung diejenige Spannung ist, die am Mahlwerk ohne Betrieb des Mahlwerks am Mahlwerk anliegt. Insbesondere entspricht die Nominal-Spannung der Spannung der Netzversorgung, beispielsweise 120 V oder 230 V.

Vorstellbar ist es, zur Bestimmung der Last-Spannung eine Heizeinrichtung der Kaffeemaschine zu betreiben, so dass diese elektrische Leistung bezieht. Hierdurch ist es insbesondere möglich, Abweichungen der am Mahlwerk anliegenden elektrischen Spannung zu berücksichtigen, wenn die Heizeinrichtung während der anschließenden Mahl-Betriebsdauer in Betrieb geht, um beispielsweise die Kaffeemaschine und/oder das Wasser zur Zubereitung des Kaffeegetränks vorzuheizen.

Alternativ oder zusätzlich ist es vorstellbar, zur Bestimmung der Last-Spannung eine Fördereinrichtung, insbesondere eine Pumpe, der Kaffeemaschine zum Fördern von Wasser durch die Kaffeemaschine als elektrischen Verbraucher zu betreiben. Hierbei kann die Fördereinrichtung, während der anschließenden Mahl-Betriebsdauer in Betrieb gehen, um Wasser in ein entsprechendes Kanalsystem der Kaffeemaschine zu fördern.

Die elektrische Leistung, mit der die weiteren elektrischen Verbraucher betrieben werden, entspricht bevorzugt derjenigen Leistung, die die Verbraucher auch während der anschließenden Mahl-Betriebsdauer beziehen.

Vorstellbar ist es auch, zumindest eine der zusätzlichen elektrischen Verbraucher mit einer für diesen Verbraucher vorgesehenen maximalen Leistung zu betreiben, um die Last-Spannung zu bestimmen.

Zweckmäßig erfolgt die Bestimmung der Nominal-Spannung und/oder der Last-Spannung für eine kurze Dauer, wobei die Dauer insbesondere im Vergleich zur anschließenden Mahl-Betriebsdauer kurz ist, insbesondere weniger als 600 Millisekunden, beispielsweise weniger als 300 Millisekunden Sekunden oder weniger als 100 Millisekunden, dauert. Somit wird sichergestellt, dass es bei der Zubereitung des Kaffeegetränks nicht zu unnötigen Verzögerungen kommt oder derartige Verzögerungen zumindest beschränkt sind.

Zum Bestimmen der jeweils am Mahlwerk anliegenden elektrischen Spannung weist die Kaffeemaschine vorzugsweise eine entsprechende Messeinrichtung auf. Die Messeinrichtung weist beispielsweise einen Voltmeter auf.

Als vorteilhaft erweisen sich Ausführungsformen, bei denen im Vorabbetrieb als Spannungsabhängigkeit ein Differential, insbesondere das zeitliche Differential, einer Funktion hinterlegt wird, welche Funktion die zeitliche Abhängigkeit einer vorgegebenen Mahlgutmenge von der am Mahlwerk anliegenden Spannung wiedergibt. Die Funktion entspricht insbesondere einer Kurve in einem Diagramm, deren eine Achse die am Mahlwerk anliegende elektrische Spannung und deren andere Achse die Dauer wiedergibt, die bei der zugehörigen anliegenden Spannung die vorgegebene Mahlgutmenge durch das Mahlwerk bereitgestellt wird. Somit ist es vereinfacht möglich, die Abhängigkeit der bereitgestellten Mahlgutmenge von der Spannung bei der Bestimmung der Mahl-Betriebsdauer zu berücksichtigen. Das Differential ist hierbei vorzugsweise eine erste Ableitung, insbesondere eine Steigung, der besagten Funktion.

Als vorteilhaft erweisen sich Ausführungsformen, bei denen vor der Bestimmung des Differentials eine Linearisierung der Funktion durchgeführt wird. Die Funktion wird also linearisiert, derart, dass ein linearer Verlauf der Funktion, das heißt insbesondere ein linearer Zusammenhang zwischen der am Mahlwerk anliegenden Spannung und der besagten Dauer zum Bereitstellen der vorgegebenen Mahlgutmenge, angenommen wird. Somit ist es insbesondere möglich, als Spannungsabhängigkeit einen Wert zu hinterlegen. Dies vereinfacht und beschleunigt die Bestimmung der Mahl-Betriebsdauer erheblich. Zudem wird somit berücksichtigt, dass die Abhängigkeit zwischen der am Mahlwerk anliegenden Spannung und der Dauer zur Bereitstellung der vorgegebenen Mahlgutmenge regelmäßig einen annähernd linearen Verlauf aufweist, so dass die Linearisierung zu lediglich kleinen Abweichungen von der ermittelten Funktion führt, welche zu entsprechend kleinen und vernachlässigbaren Abweichungen in der bestimmten Mahl-Betriebsdauer führen.

Die Abhängigkeit der Mahlgutmenge von der am Mahlwerk anliegenden elektrischen Spannung ist insbesondere durch eine Abhängigkeit einer vom Mahlwerk erzeugten Drehzahl zum Bereitstellen des Mahlguts bedingt. Dementsprechend kann die Abhängigkeit der Mahlgutmenge von der Spannung auch als eine Abhängigkeit der Drehzahl von der anliegenden Spannung bezeichnet und betrachtet werden.

Bevorzugt sind Ausführungsformen, bei denen zur Bestimmung der Mahl-Betriebsdauer die Spannungsdifferenz mit der Nominal-Spannung multipliziert und durch das Differential, insbesondere durch die erste Ableitung, beispielsweise durch die Steigung, geteilt wird. Der sich daraus ergebende Wert entspricht hierbei insbesondere der Abweichung der Dauer von einer Nominal- oder Standardmahldauer für die vorgegebene bzw. geforderte Mahlmenge. Für die Mahl-Betriebsdauer gilt also insbesondere:

$$t_{Mahl} = [(U_{Nominal} - U_{Last})/dU]* \, U_{Nominal} + C,$$

als Formel also

$$t_{Mahl} = \frac{(U_{Nominal} - U_{Last})}{dU} * U_{Nominal} + C$$

wobei $t_{Mahl}$ die Mahl-Betriebsdauer, $U_{Nominal}$ die Nominal-Spannung, $U_{Last}$ die Las-Spannung, dU das Differential sind. C ist vorzugsweise die Standard- oder Nominalmahldauer für die vorgegebene bzw. geforderte Mahlmenge, das heißt, wenn keine Schwankungen der Netzversorgung von einem Nominalwert der Netzspannung und/oder keine Schwankungen der anliegenden Spannung, insbesondere kein Unterschied zwischen der Nominal-Spannung und der Last-Spannung, vorliegt. Dementsprechend gibt der Teil der Gleichung vor C, also die Spannungsdifferenz multipliziert mit der Nominal-Spannung und geteilt durch das Differential, eine Abweichung von dieser Standardmahldauer an. C ist beispielsweise abhängig vom Nominalwert der Netzspannung, kann also unterschiedlich sein, wenn der Nominalwert der Netzspannung 120 V oder 220 V entspricht.

Es versteht sich, dass neben dem erfindungsgemäßen Verfahren auch eine Kaffeemaschine, die derart betrieben ist, zum Umfang dieser Erfindung gehört. Die Kaffeemaschine weist eine dabei Steuereinrichtung auf, die derart ausgestaltet ist, dass sie die Kaffeemaschine erfindungsgemäß betreibt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch

Fig. 1     eine stark vereinfachte, schaltplanartige Darstellung einer Kaffeemaschine,

Fig. 2     ein Flussdiagramm zur Beschreibung eines Betriebsverfahrens der Kaffeemaschine,

Fig. 3     ein Diagramm.

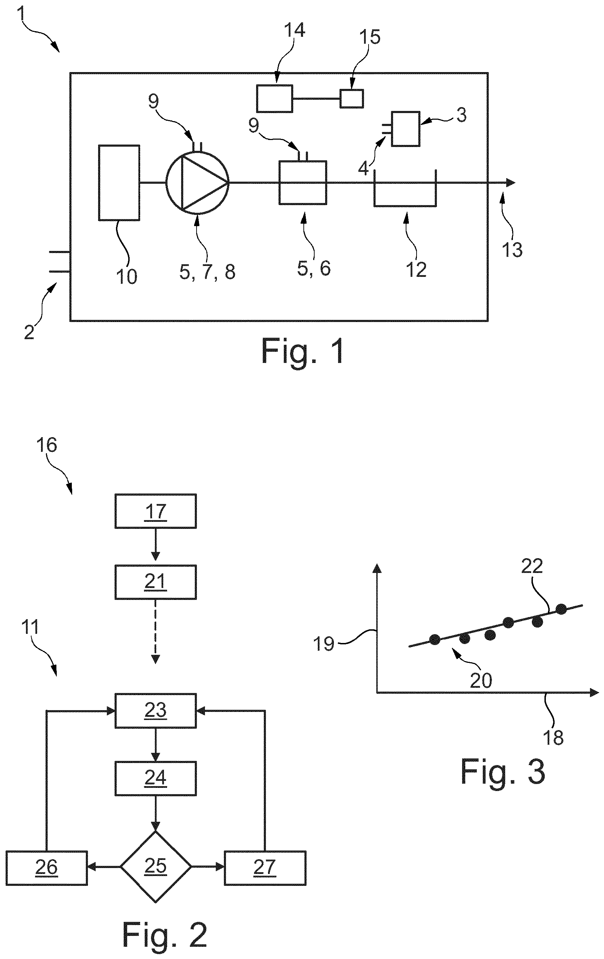

Eine Kaffeemaschine 1, wie sie in Figur 1 stark vereinfacht und schaltplanartig dargestellt ist, dient der Zubereitung eines Kaffeegetränks. Die Kaffeemaschine 1 ist hierbei elektrisch betrieben und wird über einen Versorgungsanschluss 2 über eine Netzspannung elektrisch versorgt. Die Zubereitung des Kaffeegetränks erfolgt durch das Durchführen von Wasser (nicht gezeigt) durch ein nicht gezeigtes Mahlgut. Das Mahlgut wird von einem Mahlwerk 3 bereitgestellt, das elektrisch betrieben ist. Dementsprechend ist am Mahlwerk 3 in Figur 1 ein Mahlwerkanschluss 4 angebracht, über den das Mahlwerk 3 im Betrieb elektrisch versorgt wird, wobei die elektrische Versorgung des Mahlwerks 3 über die Netzspannung erfolgt, die zuvor über nicht gezeigte Umwandler umgewandelt werden kann. Die gezeigte Kaffeemaschine 1 weist zudem zumindest einen weiteren elektrischen Verbraucher 5 auf, wobei im gezeigten Beispiel zwei zusätzliche elektrische Verbraucher 5, nämlich eine Heizeinrichtung 6 und eine Fördereinrichtung 7, insbesondere eine Pumpe 8, vorgesehen sind. Der jeweilige zusätzliche elektrische Verbraucher 5 weist einen elektrischen Anschluss 9 auf, der nachfolgend auch als Verbraucheranschluss 9 bezeichnet wird. Über den Verbraucheranschluss 9 wird der jeweilige Verbraucher 5 analog zum Mahlwerk 3 über die Netzspannung elektrisch versorgt.

Die Kaffeemaschine 1 kann ferner einen Wassertank 10 zum Bevorraten von Wasser aufweisen.

In einem Regelbetrieb 11 (vergleiche Figur 2) der Kaffeemaschine 1 stellt das Mahlwerk 3 während einer Betriebsdauer des Mahlwerks 3, nachfolgend auch Mahl-Betriebsdauer genannt, eine Mahlgutmenge des Mahlguts, insbesondere von Kaffeepulver aus Kaffeebohnen, bereit. Diese Mahlgutmenge wird in eine Brüheinheit 12 der Kaffeemaschine 1 gebracht. Durch die Brüheinheit 12 wird zur Zubereitung eines Kaffeegetränks geheiztes Wasser unter Druck geführt und das somit zubereitete Kaffeegetränk über eine Ausgabestelle 13 der Kaffeemaschine 1 ausgegeben. Das Wasser wird stromauf der Brüheinheit 12 durch die Fördereinrichtung 7 aus dem Tank 10 gefördert und mit der Heizeinrichtung 5 geheizt. Bevorzugt erfolgt bereits während des Mahlvorgangs im Mahlwerk 3, das heißt also während der Mahl-Betriebsdauer, ein Vorheizen der Kaffeemaschine 1, insbesondere von Wasser, mit Hilfe der Heizeinrichtung 5 und/oder das Fördern von Wasser mit der Fördereinrichtung 7.

Die Kaffeemaschine 1 weist zum Betreiben der Kaffeemaschine 1 eine Steuereinrichtung 14 auf, welche mit dem Mahlwerk 3 sowie den weiteren elektrischen Verbrauchern 5 kommunizierend verbunden ist und diese entsprechend ansteuern und betreiben kann. Die Kaffeemaschine 1 weist ferner eine Messeinrichtung 15 auf, welche die am Mahlwerk 3 anliegende elektrische Spannung misst und ebenfalls mit der Steuereinrichtung 14 kommunizierend verbunden ist. Die Messeinrichtung 15 kann ferner die an den übrigen elektrischen Verbrauchern 5 anliegende Spannung messen.

Das Verfahren zum Betreiben der Kaffeemaschine 1 wird nachfolgend anhand des in Figur 2 gezeigten Flussdiagramms erläutert.

In einem dem Regelbetrieb 11 vorgelagerten Vorabbetrieb 16 wird dabei zunächst in einem ersten Vorab-Verfahrensschritt 17 eine Abhängigkeit zwischen der am Mahlwerk 3 anliegenden elektrischen Spannung und der vom Mahlwerk 3 bereitgestellten Mahlgutmenge bestimmt.

Diese Bestimmung kann entsprechend des in Figur 3 gezeigten Diagramms erfolgen, wobei im Diagramm entlang einer Abszissenachse 18 die am Mahlwerk 3 anliegende elektrische Spannung und entlang einer Ordinatenachse 19 die vom Mahlwerk 3 mit der jeweiligen angelegten Spannung bereitgestellte Mahlgutmenge aufgetragen sind. Dabei wird für eine bestimmte Anzahl unterschiedlicher Spannungen eine zugehörige Mahlgutmenge dadurch bestimmt, dass die jeweilige Spannung für eine vorgegebene Dauer am Mahlwerk 3 angelegt und das Mahlwerk 3 betrieben wird. Daraus ergibt sich eine durch Punkte illustrierte Funktion 20, welche die Abhängigkeit der Mahlmenge von der anliegenden Spannung wiedergibt. Die Funktion 20 gibt also die zeitliche Abhängigkeit der Mahlmenge von der am Mahlwerk 3 anliegenden Spannung wieder.

In einem zweiten Vorab-Verfahrensschritt 21 wird die Abhängigkeit der Mahlgutmenge von der anliegenden Spannung als eine Spannungsabhängigkeit hinterlegt. Diese Spannungsabhängigkeit ist im gezeigten Beispiel das Differential, insbesondere das zeitliche Differential, beispielsweise die erste Ableitung der in Figur 3 gezeigten Funktion 20. Dabei kann, wie in Figur 3 durch eine Linie 22 angedeutet, zunächst eine Linearisierung der Funktion 20 vorgenommen, also ein linearer Zusammenhang zwischen der Spannung und der Mahlmenge angenommen und die Spannungsabhängigkeit anschließend bestimmt und hinterlegt.

Im Regelbetrieb 11 wird in einem ersten Verfahrensschritt 23 diejenige Spannung ermittelt, die am Mahlwerk 3 anliegt, ohne dass das Mahlwerk 3 oder die übrigen elektrischen Verbraucher 5 elektrische Leistung beziehen. Diese Spannung wird als Nominal-Spannung hinterlegt. In einem zweiten Verfahrensschritt 24 wird zumindest einer der anderen elektrischen Verbraucher 5, vorzugsweise die Heizeinrichtung 6, alternativ oder zusätzlich die Fördereinrichtung 7, mit der maximal möglichen Leistung für eine kurze Dauer, beispielsweise für weniger als 3 oder 2 Sekunden, betrieben und wiederum die am Mahlwerk 3 anliegende Spannung ohne Betrieb des Mahlwerks 3 selbst bestimmt und diese Spannung als Last-Spannung hinterlegt. In einem dritten Verfahrensschritt 25 wird die Differenz zwischen der Nominal-Spannung und der Last-Spannung bestimmt. Sofern die Differenz, nachfolgend auch Differenzspannung genannt, größer ist als ein vorgegebener Wert, beispielsweise als 5 Volt, erfolgt in einem vierten Verfahrensschritt 26 die Bestimmung der Betriebsdauer des Mahlwerks 3, nachfolgend auch Mahl-Betriebsdauer genannt, für welche das Mahlwerk 3 anschließend betrieben wird, um eine vorgegebene Mahlgutmenge bereitzustellen. Bei der Bestimmung dieser Mahl-Betriebsdauer werden dabei die Spannungsabhängigkeit, die Spannungsdifferenz sowie die Nominal-Spannung berücksichtigt. Insbesondere entspricht die Mahl-Betriebsdauer dem Produkt aus Spannungsdifferenz und Nominal-Spannung geteilt durch die Spannungsabhängigkeit addiert mit einer Standard- oder Nominalmahldauer für die vorgegebene bzw. geforderte Mahlmenge. , Die Nominalmahldauer entspricht derjenigen Mahldauer für die vorgegebene Mahlgutmenge, wenn keine Schwankungen der Netzverspannung von einem Nominalwert und/oder keine Schwankungen der anliegenden Spannung, insbesondere kein Unterschied zwischen der Nominal-Spannung und der Last-Spannung, vorliegt. Mit der somit bestimmten Mahl-Betriebsdauer wird das Mahlwerk 3 betrieben, um Mahlgut in der vorgegebenen Mahlgutmenge bereitzustellen und daraus ein Kaffeegetränk zuzubereiten. Anschließend kehrt das Verfahren zum ersten Verfahrensschritt 23 zurück, um beim Zubereiten des nächsten Kaffeegetränks entsprechend zu verfahren Sofern im Verfahrensschritt 25 die Spannungsdifferenz kleiner ist als der vorgegebene Wert, wird in einem fünften, zum vierten Verfahrensschritt 26 alternativen Verfahrensschritt 27 die Nominalmahldauer zum Betreiben des Mahlwerks 3 und Bereitstellen des Mahlguts verwendet.

Der Vorabbetrieb 16 kann, insbesondere ausschließlich, bei einer Erstinbetriebnahme der Kaffeemaschine 1 oder vor der Montage des Mahlwerks 3 in die Kaffeemaschine 1 durchgeführt werden. Vorstellbar ist es auch, den Vorabbetrieb 16 in regelmäßigen Abständen, beispielsweise in Serviceintervallen der Kaffeemaschine 1, zu wiederholen.

**Bezugszeichenliste**

1 Kaffeemaschine
2 Versorgungsanschluss
3 Mahlwerk
4 Mahlwerkanschluss
5 Elektrischer Verbraucher
6 Heizeinrichtung
7 Fördereinrichtung
8 Pumpe
9 Verbraucheranschluss
10 Wassertank
11 Regelbetrieb
12 Brüheinheit
13 Ausgabestelle
14 Steuereinrichtung
15 Messeinrichtung
16 Vorabbetrieb
17 1. Vorab-Verfahrensschritt
18 Abzissenachse
19 Ordinatenachse
20 Funktion
21 2. Vorab-Verfahrensschritt
22 Linearisierte Kurve
23 1. Verfahrensschritt
24 2. Verfahrensschritt
25 3. Verfahrensschritt
26 4. Verfahrensschritt
27 5. Verfahrensschritt

**Patentansprüche**

1. Verfahren zum Betreiben einer Kaffeemaschine (1), die ein elektrisch betriebenes Mahlwerk (3) aufweist, das Kaffee mahlt und eine Mahlgutmenge eines somit hergestellten Mahlguts zum Zubereiten eines Kaffeegetränks bereitstellt; wobei in einem Vorabbetrieb (16) eine Abhängigkeit zwischen der Mahlgutmenge und einer am Mahlwerk (3) anliegenden elektrischen Spannung bestimmt und als eine Spannungsabhängigkeit hinterlegt wird; wobei in einem Regelbetrieb (11) der Kaffeemaschine (3) zur Zubereitung des Kaffeegetränks vor der Zubereitung des Kaffeegetränks eine Mahl-Betriebsdauer des Mahlwerks (3) zur Bereitstellung der Mahlgutmenge abhängig von der Spannungsabhängigkeit bestimmt wird, und wobei das Mahlwerk (3) für die bestimmte Mahl-Betriebsdauer betrieben wird, um das Mahlgut bereitzustellen, **dadurch gekennzeichnet, dass** zur Bestimmung der Mahl-Betriebsdauer eine Differenz zwischen einer am Mahlwerk (3) anliegenden elektrischen Nominal-Spannung und einer am Mahlwerk (3) anliegenden elektrischen Last-Spannung bestimmt und die Mahl-Betriebsdauer abhängig von der Spannungsdifferenz bestimmt wird, wobei die Last-Spannung diejenige Spannung am Mahlwerk (3) ist, wenn zumindest ein zum Mahlwerk (3) zusätzlicher elektrischer Verbraucher (5) der Kaffeemaschine (3) elektrische Leistung bezieht, und die Nominal-Spannung diejenige Spannung ohne Leistungsbezug des zumindest einen zusätzlichen elektrischen Verbrauchers (5) ist.

2. Verfahren nach Anspruch 1, **dadurch gekennzeichnet, dass** zur Bestimmung der Nominal-Spannung und/oder der Last-Spannung das Mahlwerk (3) außer Betrieb ist.

3. Verfahren nach Anspruch 1 oder 2, **dadurch gekennzeichnet, dass** zur Bestimmung der Last-Spannung diejenigen zumindest einen elektrischen Verbraucher (5) berücksichtigt werden, welche während des anschließenden Betriebs des Mahlwerks (3) zur Bereitstellung des Mahlguts betrieben werden.

4. Verfahren nach einem der Ansprüche 1 bis 3, **dadurch gekennzeichnet, dass** zur Bestimmung der Last-Spannung eine Heizeinrichtung (6) und/oder eine Fördereinrichtung (7) der Kaffeemaschine (3) als zusätzlicher elektrischer Verbraucher (5) betrieben werden/wird und somit elektrische Leistung bezieht.

5. Verfahren nach einem der Ansprüche 1 bis 4, **dadurch gekennzeichnet, dass** zumindest einer der wenigstens einen zusätzlichen Verbraucher (5) zur Bestimmung der Last-Spannung eine für den Verbraucher (5) vorgesehene maximale elektrische Leistung bezieht.

6. Verfahren nach einem der Ansprüche 1 bis 5, **dadurch gekennzeichnet, dass** im Vorabbetrieb (16) als Spannungsabhängigkeit ein Differential, insbesondere eine erste Ableitung, einer die zeitliche Abhängigkeit einer vorgegebenen Mahlgutmenge von der am Mahlwerk (3) anliegenden Spannung wiedergebenden Funktion (20) hinterlegt wird.

7. Verfahren nach Anspruch 6, **dadurch gekennzeichnet, dass** die Funktion (20) vor der Bestimmung des Differentials linearisiert wird.

8. Verfahren nach einem der Ansprüche 6 oder 7 sowie einem der Ansprüche 1 bis 5, **dadurch gekenn-**

**zeichnet, dass** zur Bestimmung der Mahl-Betriebsdauer die Spannungsdifferenz mit der Nominal-Spannung multipliziert und durch das Differential geteilt wird.

9. Kaffeemaschine (1) mit einem elektrisch betriebenen Mahlwerk (3) zum Mahlen von Kaffee und mit einer Steuereinrichtung (14) zum Betreiben der Kaffeemaschine (1), wobei die Steuereinrichtung (14) derart ausgestaltet ist, dass sie die Kaffeemaschine (1) gemäß dem Verfahren nach einem der Ansprüche 1 bis 8 betreibt.

## Claims

1. Method for operating a coffee machine (1), which has an electrically operated grinder (3), which grinds coffee and provides an amount of ground product of a ground product produced thereby for the preparation of a coffee beverage; wherein, during an advance operation (16), a dependency between the amount of ground product and an electrical voltage applied to the grinder (3) is determined and stored as a voltage dependency; wherein, during a regulated operation (11) of the coffee machine (3) for preparation of the coffee beverage, before the preparation of the coffee beverage a grinding operating duration of the grinder (3) for preparation of the amount of ground product is determined as a function of the voltage dependency, and wherein the grinder (3) is operated for the determined grinding operating duration, in order to provide the ground product, **characterised in that**, to determine the grinding operating duration, a difference between an electrical nominal voltage applied to the grinder (3) and an electrical load voltage applied to the grinder (3) is determined and the grinding operating duration is determined as a function of the voltage difference, wherein the load voltage is the voltage at the grinder (3) when at least one electrical consumer (5) of the coffee machine (3) in addition to the grinder (3) draws electrical power, and the nominal voltage is the voltage without the power draw by the at least one additional electrical consumer (5).

2. Method according to claim 1, **characterised in that**, to determine the nominal voltage and/or the load voltage, the grinder (3) is disabled.

3. Method according to claim 1 or 2, **characterised in that**, to determine the load voltage, the at least one electrical consumer (5) that is operated during the subsequent operation of the grinder (3) to provide the ground product is taken into consideration.

4. Method according to one of claims 1 to 3, **characterised in that**, to determine the load voltage, a heating facility (6) and/or a conveying facility (7) of the coffee machine (3) is/are operated as additional electrical consumer (5) and thus draws/draw electrical power.

5. Method according to one of claims 1 to 4, **characterised in that** at least one of the at least one additional consumers (5), to determine the load voltage, draws a maximum electrical power provided for the consumer (5).

6. Method according to one of claims 1 to 5, **characterised in that**, during the advance operation (16), a differential, in particular a first derivative, of a function (20) rendering the temporal dependency of a predefined amount of ground product upon the voltage applied to the grinder (3) is stored as voltage dependency.

7. Method according to claim 6, **characterised in that** the function (20) is linearised before the determination of the differential.

8. Method according to one of claims 6 or 7 as well as one of claims 1 to 5, **characterised in that**, to determine the grinding operating duration, the voltage difference is multiplied by the nominal voltage and divided by the differential.

9. Coffee machine (1) with an electrically operated grinder (3) for grinding coffee and with a control facility (14) for operating the coffee machine (1), wherein the control facility (14) is embodied in such a manner that it operates the coffee machine (1) in accordance with the method according to one of claims 1 to 8.

## Revendications

1. Procédé de fonctionnement d'une machine à café (1), qui comprend un moulin (3) actionné électriquement, qui moud du café et qui prépare une quantité de mouture d'une mouture ainsi produite pour préparer une boisson de café,

   dans lequel, dans une opération préalable (16), une relation entre la quantité de mouture et une tension électrique appliquée au moulin (3) est déterminée, et enregistrée en tant que relation à la tension,
   dans lequel, dans un fonctionnement courant (11) de la machine à café (1) pour préparer la boisson de café, avant de préparer la boisson de café, une durée de fonctionnement de broyage du moulin (3) pour préparer la quantité de mouture est déterminée en fonction de la relation à la tension, et

dans lequel le moulin (3) est actionné pendant la durée de fonctionnement de broyage déterminée pour fournir la mouture, **caractérisé en ce que**, pour déterminer la durée de fonctionnement de broyage, une différence entre une tension nominale électrique appliquée au moulin (3) et une tension en charge électrique appliquée au moulin (3) est déterminée et la durée de fonctionnement de broyage est déterminée en fonction de la différence de tension, dans lequel la tension en charge est la tension appliquée au moulin (3) lorsqu'au moins un consommateur électrique (5) de la machine à café (3) supplémentaire par rapport au moulin (3) tire une puissance électrique, et la tension nominale est la tension en l'absence d'un tirage de puissance de l'au moins un consommateur électrique supplémentaire (5).

2. Procédé selon la revendication 1, **caractérisé en ce que**, lors de la détermination de la tension nominale et/ou de la tension en charge, le moulin (3) est arrêté.

3. Procédé selon la revendication 1 ou 2, **caractérisé en ce que**, pour déterminer la tension en charge, on prend en compte ceux des au moins un consommateur(s) électrique (s) supplémentaire(s) (5) qui sont alimentés pendant le fonctionnement ultérieur du moulin (3) pour préparer la mouture.

4. Procédé selon l'une des revendications 1 à 3, **caractérisé en ce que**, pour déterminer la tension en charge, un dispositif de chauffage (6) et/ou un dispositif de transport (7) de la machine à café (3) est/sont actionnés à titre de consommateurs électriques supplémentaires (5) et tirent ainsi une puissance électrique.

5. Procédé selon l'une des revendications 1 à 4, **caractérisé en ce qu'**au moins un des au moins un des consommateur(s) électrique(s) supplémentaires (5), pour déterminer la tension en charge, tire une puissance électrique maximale prévue pour le consommateur (5).

6. Procédé selon l'une des revendications 1 à 5, **caractérisé en ce que**, dans une opération préalable (16), en tant que relation à la tension, un différentiel, en particulier une première dérivée d'une fonction (20) représentant la relation temporelle d'une quantité de mouture prédéfinie à la tension appliquée au moulin (3) est enregistrée.

7. Procédé selon la revendication 6, **caractérisé en ce que** la fonction (20) est linéarisée avant la détermination du différentiel.

8. Procédé selon l'une des revendications 6 ou 7, ainsi que l'une des revendications 1 à 5, **caractérisé en ce que**, pour déterminer la durée de fonctionnement de broyage, la différence de tension est multipliée par la tension nominale et divisée par le différentiel.

9. Machine à café (1) comprenant un moulin actionné électriquement (3) pour moudre du café et un dispositif de commande (14) pour commander la machine à café (1), dans laquelle le dispositif de commande (14) est configuré de manière à faire fonctionner la machine à café (1) selon le procédé selon l'une des revendications 1 à 8.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2152758 A1
- EP 2030539 A1
- EP 0245197 A2
- JP 2018033788 A